# EUROPEAN PATENT APPLICATION

(11) **EP 4 775 505 A1**
(43) Date of publication of application: **15.07.2026**
(21) Application number: 25218856.0
(22) Date of filing: 26.11.2025
(51) Int. Cl.: B65D 51/20, B65D 53/04, B65D 77/20

(54) **RING PULL CLOSURE LINER**

(30) Priority: 06.01.2025 TW 114100509; 21.07.2025 TW 114127523
(71) Applicant: Yang, Yen-Wu, 221 New Taipei City (TW)
(72) Inventor: Yang, Yen-Wu, 221 New Taipei City (TW)
(74) Representative: DTS Patent- und Rechtsanwälte PartmbB

(57) **Abstract**

A ring pull closure liner (50; 100; 100'; 100"; 100‴) includes: a functional layer (1; 1'), a release layer (2) and a strong adhesion layer (6), an electromagnetic induction heating layer (3) and a sealing layer (4). The functional layer (1; 1') of the ring pull closure liner (50; 100; 100'; 100"; 100‴) is provided with a main cutting line (9a) and a tearing line (1122a0). The main cutting line (9a) divides the ring pull closure liner (50; 100; 100'; 100"; 100‴) into an outer ring (111) and an inner ring (112). The inner ring (112) includes a lifting part (1122), a lifting neck (1123) and a hollow-out area (1121). The lifting neck (1123) is connected with the bottom end of the lifting part (1122). The hollow-out area (1121) is formed by cutting a secondary cutting line (9b), the hollow-out area (1121) is located at a periphery of the lifting part (1122), and the hollow-out area (1121) is connected with two sides of the lifting neck (1123).

## Description

### BACKGROUND OF THE INVENTION

### 1. Field of the Invention

The present disclosure relates to a closure liner, in particular to a ring pull closure liner.

### 2. Description of the Related Art

In order to prevent the contents from leaking out and deteriorating due to the influence of the external environment, a closure liner is used to seal the container mouth of packaging containers such as beverage cans and medicine cans. Also, generally speaking, closure liners are made of aluminum foil or cardboard.

By using a closure liner to tightly fit the container mouth, it can prevent the contents from leaking out and preserve the contents in a sealing manner.

### BRIEF SUMMARY OF THE INVENTION

However, because the design of the conventional closure liner mainly considers the sealing performance, the ease of tearing is not considered. In this case, the sealing aluminum-plastic film of the container mouth is not easy to open by pressing with fingers, and it is cumbersome and dangerous to cut with a knife or poke with an awl, resulting in inconvenience for users.

In addition, because the design of the conventional closure liner mainly considers the sealing performance, the resealable after opening the seal is also not considered. In this case, after painstakingly removing the sealing aluminum-plastic film at the container mouth, the cardboard remaining inside the closure has poor oxygen and moisture barrier function, so the contents in the container are easily affected by oxygen and moisture and deteriorate.

Therefore, solving the above-mentioned problems encountered by the conventional closure liner and effectively improving the convenience of tearing has become a problem that the present technical field urgently wants to solve.

In order to solve the above-mentioned problem, a ring pull closure liner of an aspect of the present disclosure includes: a functional layer, which includes a surface film and a bonding film sequentially from top to bottom; a sealing layer, located below the functional layer; a release layer and a strong adhesion layer (6), the release layer and the strong adhesion layer are located between the surface film and the sealing layer; and an electromagnetic induction heating layer, located between the surface film and the sealing layer; wherein the functional layer of the ring pull closure liner is provided with a main cutting line, the main cutting line divides the ring pull closure liner into an outer ring and an inner ring, and an inner side of the outer ring is surroundingly connected with an outer side of the inner ring, wherein the inner ring includes: a lifting part; a lifting neck, connected with the bottom end of the lifting part; and a hollow-out area, formed by cutting a secondary cutting line, the hollow-out area is located at a periphery of the lifting part, and the hollow-out area is connected with two sides of the lifting neck; wherein a thickness of the hollow-out area is less than a thickness of the ring pull closure liner, wherein the functional layer of the ring pull closure liner is further provided with a tearing line, one end of the tearing line is connected with the lifting part, the other end of the tearing line is connected with the main cutting line, and a part of the tearing line is completely overlapped with the main cutting line, and wherein the release layer and the strong adhesion layer are located on a lower surface of the bonding film corresponding to the lifting part, or an upper surface or a lower surface of the electromagnetic induction heating layer.

In one embodiment, the lifting part, the lifting neck and the hollow-out area are all located in the same half of the inner ring.

In one embodiment, the tearing line includes a first line segment and a second line segment, the first line segment is provided with at least one breakpoint, and the second line segment is provided with at least four breakpoints, the part of the functional layer corresponding to the breakpoints is not completely cut off in the vertical direction, and the part of the functional layer corresponding to the tearing line except for the breakpoints is completely cut. In a preferable embodiment, the tearing line includes a first line segment and a second line segment, the first line segment is provided with at least one breakpoint, and the second line segment is provided with at least four breakpoints, an end part of the upper surface of the functional layer corresponding to the breakpoints is not cut in the vertical direction from 0.02mm to 0.9mm along the horizontal direction of the tearing line, and the part of the functional layer corresponding to the tearing line except for the breakpoints is completely cut.

In one embodiment, the material of the surface film is selected from at least one of the group consisting of polyimide (PI), polyethylene naphthalate (PEN), polyamide (PA), polyethylene terephthalate (PET), polyethylene (PE) and polypropylene (PP).

In one embodiment, the material of the bonding film is selected from at least one of the group consisting of polyethylene terephthalate (PET), polypropylene (PP), expandable polyethylene (EPE), expandable polypropylene (EPP), polyamide (PA), and polyethylene (PE).

In one embodiment, the sealing layer is a hot melt glue or a combination of a sealing film and an adhesive, and the material of the hot melt glue is selected from at least one of the group consisting of PE, PP, ethylene-methyl acrylate copolymer (EMAC), ethylene methacrylic acid copolymer (EMAA), ethylene-ethyl acrylate (EEA), ethylene acrylic acid copolymer (EAA), ethylene butyl acrylate (EBA) and ethylene-methyl methacrylate copolymer (EMMA); the sealing film is selected from at least one of the group consisting of PE, PP, PA, PVDC, EVOH and PET; and the adhesive is located between the sealing film and the electromagnetic induction heating layer.

In one embodiment, the strong adhesion layer makes the peeling strength between the bonding film and the electromagnetic induction heating layer, measured by a standard of ASTM D903, greater than 12N/15mm.

In one embodiment, the strong adhesion layer is dry compound adhesive or hot melt lamination glue, and the material of the hot melt lamination glue is selected from at least one of the group consisting of PE, PP, EMAC, EMAA, EEA, EAA and EMMA.

In one embodiment, the release layer is coated on a lower surface of the functional layer, and a coating area of the release layer is not less than the lifting part.

In one embodiment, the release layer is coated on an upper surface of the electromagnetic induction heating layer, and a coating area of the release layer is not less than the hollow-out area and the lifting part.

In one embodiment, the surface film and the bonding film therebetween further include a lamination film and/or a lamination foaming film, and the lamination film is at least one of the group consisting of PI, PEN, PET, PP, PA, and PE, the lamination foaming film is EPE or EPP.

In one embodiment, the electromagnetic induction heating layer is aluminum foil or a wireless information integrated flake.

In one embodiment, the wireless information integrated flake includes: a base film; an information and heating layer, including an information area and an electromagnetic induction heating ring; a first adhesive layer, located between the base film and the information and heating layer; wherein the information area has an antenna and a chip to be mutually conducted, and the electromagnetic induction heating ring is around the information area in a plan viewing angle.

In one embodiment, the wireless information integrated flake further has a protective layer and a second adhesive layer, the protective layer is located on a side of the information and heating layer away from the base film, and the second adhesive layer is located between the information and heating layer and the protective layer.

In one embodiment, an inner side of the inner edge of the electromagnetic induction heating ring further includes an electromagnetic induction heating ring inner side cutting line (i.e., an inner side cutting line of the electromagnetic induction heating ring), and the electromagnetic induction heating ring inner side cutting line has a plurality of breakpoints, the end part of the upper surface of the functional layer corresponding to the breakpoints is not cut in the vertical direction from 0.02mm to 0.9mm along the horizontal direction of the electromagnetic induction heating ring inner side cutting line, the part of the wireless information integrated flake corresponding to the electromagnetic induction heating ring inner side cutting line except for the breakpoints is completely cut off, and the plurality of breakpoints of the electromagnetic induction heating ring inner side cutting line correspond to the plurality of breakpoints of the main cutting line of the functional layer, the electromagnetic induction heating ring inner side cutting line is formed by cutting by a die cutter in a continuous arrangement; also, the electromagnetic induction heating ring inner side cutting line is located between the information area and the electromagnetic induction heating ring and around the information area. **In** one preferable embodiment, the end part of the upper surface of the functional layer corresponding to the breakpoints is not cut in the vertical direction from 0.02mm to 0.9mm along the horizontal direction of the electromagnetic induction heating ring inner side cutting line, the part of the functional layer corresponding to the electromagnetic induction heating ring inner side cutting line except for the breakpoints is completely cut off, the part of the wireless information integrated flake corresponding to the electromagnetic induction heating ring inner side cutting line except for the breakpoints is completely cut off.

In one embodiment, there is a spacing between the electromagnetic induction heating ring and the information area. Also, in one embodiment, the spacing is a space between the outermost edge of the information area and the innermost edge of the electromagnetic induction heating ring, which is 0.1mm-3mm. Also, in one preferable embodiment, there is full of a spacing between the electromagnetic induction heating ring and the information area.

In one embodiment, the information and heating layer further includes at least one physical connection bridge, which is used to connect the information area and the electromagnetic induction heating ring.

By the ring pull closure liner of the present disclosure, the present inventors can not only prevent the contents from leaking and deteriorating due to the influence of the external environment, but also allow the user to directly hold the lifting part and pull up and peel off along the lifting part, the lifting neck and the tearing line without using foreign objects, so that the layers in the inner ring of the ring pull closure liner can be pulled up with the lifting part, thereby further achieving the effect of facilitating opening. In addition, during the entire opening process, the resealable outer ring structure is not damaged, and the entire opening process is very convenient and fast. In addition, when the container is closed by the closure, the closure will firmly press the resealable outer ring left to the container mouth, so that the content can still be well sealed when the closure is locked.

An aspect of the present disclosure is completed in view of the above-mentioned problem point of prior art, and the object is to provide a ring pull closure liner, which can further enhance the convenience of the user to tear it apart.

### BRIEF DESCRIPTION OF THE DRAWINGS

FIG. 1 is a schematic sectional diagram of a ring pull closure liner of an embodiment of the present disclosure.
FIG. 2 is a schematic top view of the ring pull closure liner of an embodiment of the present disclosure.
FIG. 3 is a schematic top view of the ring pull closure liner of another embodiment of the present disclosure.
FIG. 4 is a schematic top view of the ring pull closure liner of further embodiment of the present disclosure.
FIG. 5A is a schematic sectional diagram of the ring pull closure liner of another embodiment of the present disclosure.
FIG. 5B is a schematic sectional diagram of the ring pull closure liner of further embodiment of the present disclosure.
FIG. 5C is a schematic sectional diagram of the ring pull closure liner of still further embodiment of the present disclosure.
FIG. 6 is a schematic sectional diagram of a functional layer of a modification example of the present disclosure.
FIG. 7 is a schematic sectional diagram of a wireless information integrated flake of an embodiment of the present disclosure.
FIG. 8A is a schematic plan diagram of an information and heating layer of an embodiment of the present disclosure.
FIG. 8B is a schematic plan diagram of the information and heating layer of another embodiment of the present disclosure.
FIG. 9A is a schematic plan diagram of an information area of an embodiment of the present disclosure.
FIG. 9B is a schematic plan diagram of the information area of another embodiment of the present disclosure.
FIG. 10 is a schematic sectional diagram of the wireless information integrated flake of another embodiment of the present disclosure.
FIG. 11A to FIG. 11C are schematic top views for illustrating the ring pull closure liner of other embodiment of the present disclosure.

### DETAILED DESCRIPTION OF THE INVENTION

The implementation of the present disclosure is illustrated by the specific embodiments as follows, so one skilled in the art may understand other advantages and effects of the present disclosure by the contents disclosed in the specification. The present disclosure may also be implemented or applied by other embodiments, and the details in the specification may also be modified and varied based on different views and applications without departing from the spirit of the present disclosure.

Unless otherwise specified herein, the term "A-B" used in the specification and the claims attached includes the meaning of "A or more and B or less". For example, the term "10-40 wt%" includes the meaning of "10 wt% or more and 40 wt% or less".

In addition, in the context of the present disclosure, it should be noted that terms such as "first", "second" and "third" are used to distinguish differences between elements, and not to limit the elements themselves or to represent a particular order of elements. It should be noted that the same element or step may be indicated by the same reference numeral in the following description.

### [First embodiment]

### <Ring pull closure liner>

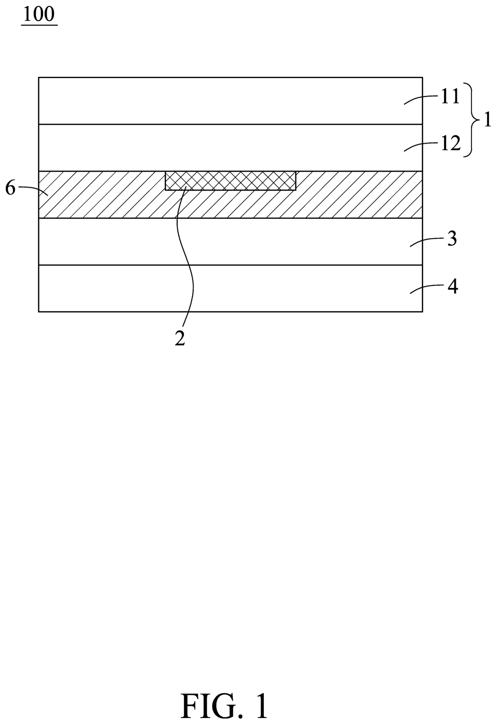

First, referring to FIG. 1, FIG. 1 is a schematic sectional diagram of a ring pull closure liner 100 of an embodiment of the present disclosure. As shown in FIG. 1, the ring pull closure liner 100 of the embodiment of the present disclosure includes sequentially from top to bottom: a functional layer 1, which includes a surface film 11 and a bonding film 12 sequentially from top to bottom; a release layer 2 and a strong adhesion layer 6; an electromagnetic induction heating layer 3; and a sealing layer 4. Each layer is described in detail below.

### <<Surface film>>

The surface film 11 is used to make a surface layer of the ring pull closure liner 100, and an upper surface or a lower surface thereof may be a printing surface to print different patterns. In one embodiment, the material of the surface film 11 may be selected from at least one of the group consisting of PI, PEN, PA, PET, PE and PP. Also, a thickness of the surface film 11 is preferably 12 to 150µm, and in the range, the tensile strength is large, and the surface is flat and the brightness is good.

### <<Bonding film>>

The bonding film 12 is mainly used for compounding with the electromagnetic induction heating layer 3 described later. In one embodiment, the material of the bonding film 12 may be selected from at least one of the group consisting of PET, PP, EPE, EPP, PA and PE, and a thickness of the bonding film 12 is preferably 12 to 200µm; thus, the peeling strength of the bonding film 12 and the electromagnetic induction heating layer 3 after compounding can be improved; or thus, the resealable capacity of the ring-pull closure liner 100 can be further increased by foaming material and thickening.

### <<Release layer>>

The release layer 2 is located between the functional layer 1 and the sealing layer 4. The material of the release layer 2 may be silicone oil, varnish or wax, etc., and a surface of the release layer 2 may be smooth, matte or lattice, so that the release layer 2 has easy peelability. The release layer 2 is located on a lower surface of the lifting part described later or an upper surface of the electromagnetic induction heating layer described later, so that the user's fingers can pinch the lifting part and easily tear an inner ring of the ring pull closure liner 100. Also, a thickness of the release layer 2 is preferably 0.5 to 40µm, so that the lifting part is not easily adhered to the electromagnetic induction heating layer 3 below, and the lifting part can be easily lifted.

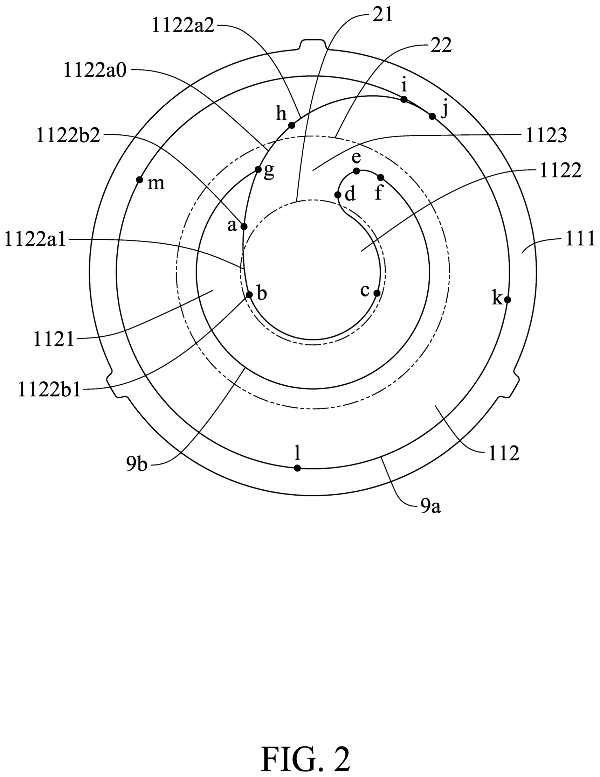

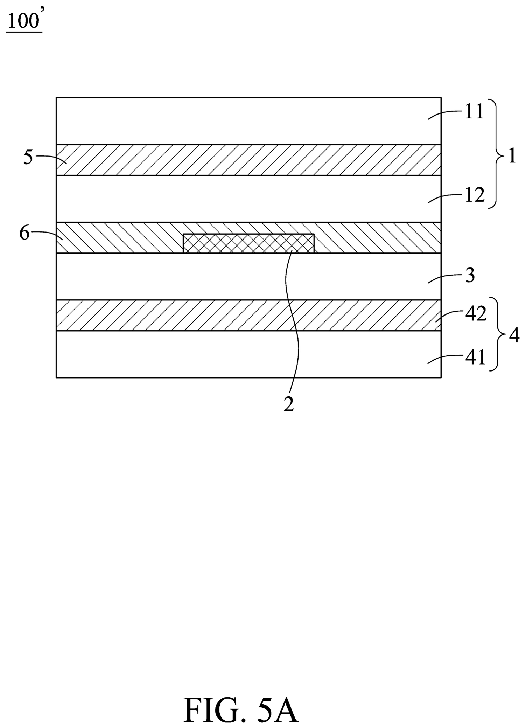

In one embodiment, as shown in FIG. 1, the release layer 2 is coated on a lower surface of the functional layer 1, and a coating area of the release layer 2 is not less than the lifting part described later, whereby, after a hollow-out area is cut off from the functional layer 1, after the functional layer 1 is laminated with the layer below, it can be ensured that the lifting part is not easily adhered to the electromagnetic induction heating layer 3 below, and the lifting part can be easily lifted. Also, in another embodiment (referring to FIG. 5A), as shown in FIG. 5A, the release layer 2 is coated on an upper surface of the electromagnetic induction heating layer 3 described later, and the coating area of the release layer 2 is not less than the hollow-out area and the lifting part described later, and the coating area of the release layer 2 is not larger than a second coating range 22 shown in FIG. 2 to FIG. 4, whereby, after the functional layer 1 is laminated with the layer below, the hollow-out area can be easily detached after the hollow-out area is cut down from a direction of the surface film of the functional layer 1, and it can be ensured the lifting part is not easily adhered to the electromagnetic induction heating layer 3 below, and the lifting part can be easily lifted.

### <<strong adhesion layer >>

The strong adhesion layer 6 is located between the functional layer 1 and the sealing layer 4. More specifically, the strong adhesion layer 6 is located between the bonding film 12 and the electromagnetic induction heating layer 3, and it is a layer used to join the bonding film 12 and the electromagnetic induction heating layer 3. Also, because there is the release layer 2 between the bonding film 12 and the electromagnetic induction heating layer 3, and the release layer 2 belongs to a material that is easy to peel off, the strong adhesion layer 6 can be further used to closely compound the bonding film 12, the release layer 2 and the electromagnetic induction heating layer 3 with each other. In addition, the strong adhesion layer 6 can use dry compound adhesive with strong viscosity or hot melt lamination glue with large peeling strength, so that the peeling strength between the bonding film and the electromagnetic induction heating layer, measured by a standard of ASTM D903, is greater than 12N/15mm, thereby ensuring that the functional layer starting from the lifting neck and the electromagnetic induction heating layer below, the electromagnetic induction heating layer and the sealing layer can be teared apart with extremely strong peeling strength. In one embodiment, the material of the hot melt lamination glue may be selected from at least one of the group consisting of PE, PP, EMAC, EMAA, EEA, EAA and EMMA. Also, a thickness of the hot melt lamination glue is preferably 4 to 60µm. Accordingly, when the user holds the lifting part, etc., and pulls up and peels off, it is easier to bring each layer of the inner ring of the ring pull closure liner 100 to be pulled up and peeled off together.

In one embodiment, the release layer 2 and the strong adhesion layer 6 are located on the lower surface of the lifting part or the upper surface of the electromagnetic induction heating layer 3 as described later. Taking FIG. 1 as an example, the release layer 2 and the strong adhesion layer 6 are coated on the lower surface of the bonding film 12; also, taking FIG. 5A as an example, the release layer 2 and the strong adhesion layer 6 are coated on the upper surface of the electromagnetic induction heating layer 3.

### <<Electromagnetic induction heating layer>>

The electromagnetic induction heating layer 3 is located between the functional layer 1 and the sealing layer 4. The electromagnetic induction heating layer 3 may be aluminum foil or a wireless information integrated flake as described below. The aluminum foil is an existing structure in conventional closure liners. The thickness of the aluminum foil is preferably 10 to 40µm, which can strengthen the barrier function against moisture and oxygen, prevent leakage of contents, and seal and preserve the contents.

Also, the wireless information integrated flake described later can be used to replace the aluminum foil, which can effectively reduce the usage amount of aluminum foil and reduce energy consumption. Specifically, by the wireless information integrated flake of the present disclosure, the function of wireless information transmission can be increased, and the waste of material can be reduced, energy consumption can be reduced, the waste of manpower can be avoided, the interference of metal and liquid is avoided, the production efficiency is improved, the communication performance is good and the communication distance is greatly enhanced, and the automation, digitization and intelligent development of factory, warehouse, logistics, store, unmanned cashier management have been greatly enhanced.

### <<Sealing layer >>

The sealing layer 4 is located below the functional layer 1. The sealing layer 4 is mainly used for sealing the container mouth, and the sealing layer 4 may be a hot melt glue or a combination of a sealing film and an adhesive. Specifically, as shown in FIG. 1, the sealing layer 4 is a single-layer hot melt glue, and the main material of the hot melt glue may be selected from at least one of the group consisting of PE, PP, EMAC, EMAA, EEA, EAA, EBA and EMMA, and a thickness of the hot melt glue may be 4 to 100µm.

Also, in another embodiment (referring to FIG. 5A), as shown in FIG. 5A, the sealing layer 4 may be a combination of the sealing film 41 and the adhesive 42, and the adhesive 42 is located between the sealing film 41 and the electromagnetic induction heating layer 3, so that a suitable sealing film 41 can be selected to seal different containers. Among them, the sealing film 41 may be selected from at least one of the group consisting of PE, PP, PA, PVDC, EVOH and PET, and the adhesive 42 may be a conventional adhesive, such as dry compound adhesive, etc., and there is no special limitation. Also, a thickness of the sealing film may be 12 to 100µm.

Also, in another embodiment, the ring pull closure liner includes, from top to bottom, a functional layer, which includes a surface film and a bonding film from top to bottom; an electromagnetic induction heating layer; a release layer and a strong adhesion layer; and a sealing layer.

In addition, although it is not shown in the figures, the layers of the ring pull closure liner 100 of the present embodiment may be laminated by various ways (such as bonding, joining or laminating, etc.).

Referring to FIG. 2 to FIG. 4, FIG. 2 to FIG. 4 illustrate the tearing mode of the ring pull closure liner 100 of each embodiment of the present disclosure. Also, FIG. 2 to FIG. 4 are schematic top views of the ring pull closure liner 100 of three different embodiments of the present disclosure.

First, as shown in FIG. 2, the upper surface of the ring pull closure liner 100 (i.e., the upper surface equivalent to the functional layer) is provided with a main cutting line 9a, the main cutting line 9a divides the ring pull closure liner 100 into an outer ring 111 and an inner ring 112, and an inner side of the outer ring 111 is surroundingly connected with an outer side of the inner ring 112. Taking FIG. 2 as an example, the main cutting line 9a is equivalent to a line formed by points i-j-k-l-m-i. In the process of lifting and tearing the ring pull closure liner 100 with the user's fingers, the outer ring 111 will not be damaged and can be pressed and sealed on the container mouth again.

Also, as shown in FIG. 2, the inner ring 112 may include a hollow-out area 1121, a lifting part 1122 and a lifting neck 1123. Specifically, taking FIG. 2 as an example, the hollow-out area 1121 refers to an area surrounded by points a-b-c-d-e-f-g-a, the lifting part 1122 is equivalent to a quasi-circular area surrounded by points a-b-c-d-a, and the lifting neck 1123 is equivalent to an area surrounded by points a-g-e-d.

The lifting part 1122 has a first starting point 1122b1 and a second starting point 1122b2, taking FIG. 2 as an example, the first starting point 1122b1 may be a point b, and the second starting point 1122b2 may be a point a. The lifting neck 1123 is connected with the lifting part 1122, taking FIG. 2 as an example, the lifting neck 1123 is connected with a top of the lifting part 1122. The hollow-out area 1121 is formed by cutting a secondary cutting line 9b, taking FIG. 2 as an example, the secondary cutting line 9b is equivalent to a line connected by points a-b-c-d-e-f-g-a. The hollow-out area 1121 is located at a periphery of the lifting part 1122, and the hollow-out area 1121 is connected with two sides of the lifting neck 1123, taking FIG. 2 as an example, one end (i.e., point g) of the hollow-out area 1121 is connected with a left side of the lifting neck 1123, and the other end (i.e., point e) of the hollow-out area 1121 is connected with a right side of the lifting neck 1123. Also, the hollow-out area 1121 is the part where the functional layer is removed, so that the thickness of the hollow-out area 1121 is less than the thickness of the ring pull closure liner 100, whereby the nails and fingertips of the user's fingers can poke a lower part of the lifting part.

Next, the upper surface of the ring pull closure liner 100 is also provided with a tearing line 1122a0. One end (i.e., point b) of the tearing line 1122a0 is connected with the lifting part 1122, the other end (i.e., point i) of the tearing line 1122a0 is connected with the main cutting line 9a, and a part of the tearing line 1122a0 is completely overlapped with the main cutting line 9a. Taking FIG. 2 as an example, the tearing line 1122a0 is equivalent to a line connected by points b-a-g-h-i-j-k-l-m-i. The tearing line 1122a0 spans one side of the lifting neck 1123 (e.g., a left side of the lifting neck 1123, i.e., point g).

In one embodiment, the tearing line 1122a0 includes a first line segment 1122a1 and a second line segment 1122a2. One end of the first line segment 1122a1 is connected with the first starting point 1122b1, and the other end of the first line segment 1122a1 is connected with the main cutting line 9a. The first line segment 1122a1 spans one side of the lifting neck 1123 (e.g., the left side of the lifting neck 1123, i.e., point g). Taking FIG. 2 as an example, the first line segment 1122a1 is equivalent to a line connected by points b-a-g-h-i. One end of the second line segment 1122a2 is connected with the second starting point 1122b2, and the other end of the second line segment 1122a2 is connected with the main cutting line 9a. The second line segment 1122a2 spans one side of the lifting neck 1123 (e.g., the left side of the lifting neck 1123, i.e., point g), the second line segment 1122a2 partially overlaps the first line segment 1122a1, and a part of the second line segment 1122a2 completely overlaps the main cutting line 9a. Taking FIG. 2 as an example, the second line segment 1122a2 is equivalent to a line connected by points a-g-h-i-j-k-l-m-i.

In this way, the user can directly hold the lifting part 1122 and pull up and peel off along the lifting part 1122, the lifting neck 1123 and the tearing line 1122a0, so that each layer in the inner ring 112 of the ring pull closure liner 100 is pulled upwards with the lifting part 1122, and then the effect of convenient opening is further realized.

Also, in the present embodiment, the first line segment 1122a1 is provided with at least one breakpoint, and the second line segment 1122a2 is provided with at least four breakpoints, so that even if the functional layer 1 is cut off or the hollow-out area of the functional layer 1 is cut off, the various blocks of the functional layer 1 can still be connected at the breakpoints and will not be scattered. **In** one embodiment, the part of the functional layer corresponding to the breakpoints is not completely cut off in the vertical direction. For example, in another embodiment, an end part of the upper surface of the functional layer corresponding to the breakpoints is not cut in the vertical direction from 0.02mm to 0.9mm along the horizontal direction of the tearing line 1122a0, and the part of the functional layer 1 corresponding to the tearing line 1122a0 except for the breakpoints is completely cut. **In** this way, when the user pinched and lifted the lifting part by hand and tore it to the breaking point along the tearing line, a short pause in the tearing action will be formed, so as to continue to accumulate the increased tearing force and be more conducive to subsequent tearing; in addition, during the processing, the existence of breakpoints also pulls the lifting part and the lifting neck from sagging down or floating up, so as to avoid poor quality during the processing.

In addition, in the present embodiment, the secondary cutting line 9b (equivalent to the line connected by the points a-b-c-d-e-f-g-a) fails to have a break point, so that after the functional layer 1 is cut out with a contour line of the hollow-out area, the residual material of the hollow-out area can easily be separated from the functional layer 1.

In one embodiment, if the release layer is coated on the lower surface of the functional layer, the coating area of the release layer is not less than the lifting part, taking FIG. 2 as an example, the coating area of the release layer is not less than the first coating range 21 (equivalent to the area surrounded by the dashed line in the figure), whereby, after a hollow-out area is cut off from the functional layer 1, after the functional layer 1 is laminated with the layer below, it can be ensured that the lifting part is not easily adhered to the electromagnetic induction heating layer 3 below, and the lifting part can be easily lifted. Also, in another embodiment, if the release layer is coated on the upper surface of the electromagnetic induction heating layer described later, the coating area of the release layer is not less than the hollow-out area and the lifting part described later, taking FIG. 2 as an example, the coating area of the release layer is not larger than the second coating range 22 (equivalent to the area surrounded by the dashed line in the figure), whereby, after the functional layer 1 is laminated with the layer below, the hollow-out area can be easily detached after the hollow-out area is cut down from a direction of the surface film of the functional layer 1, and it can be ensured the lifting part is not easily adhered to the electromagnetic induction heating layer 3 below, and the lifting part can be easily lifted.

In the embodiment, the main cutting line 9a, the secondary cutting line 9b and the tearing line 1122a0 can be regarded as a large cutting line, taking FIG. 2 as an example, the large cutting line is equivalent to a line connected by points g-f-e-d-c-b-a-g-h-i-j-k-l-m-i. In one embodiment, the large cutting line can be cut by a die cutter in a continuous arrangement, and then the large cutting line is formed in one go, so that the convenience of manufacturing can be improved in a one-stage manufacturing mode, and it is easy to tear apart and keep aesthetic.

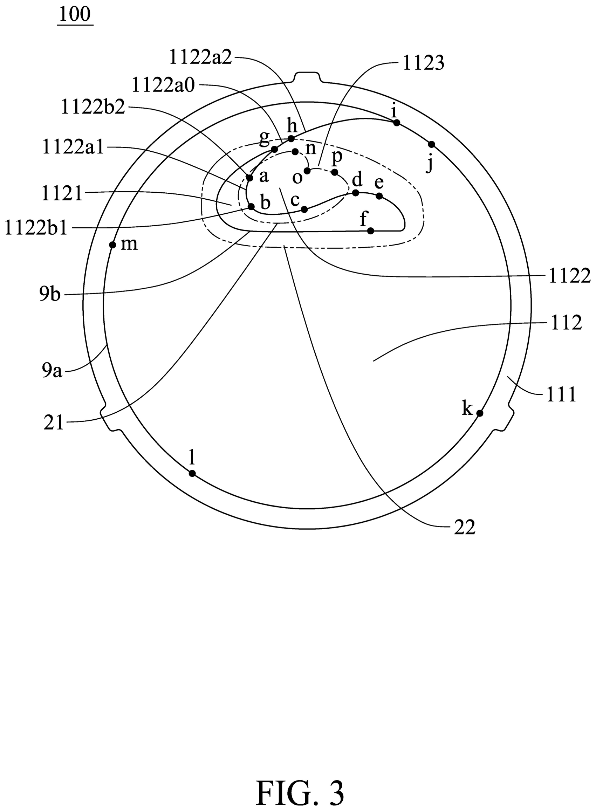

Secondly, as shown in FIG. 3, the functional layer 1 of the ring pull closure liner 100 is provided with a main cutting line 9a, the main cutting line 9a divides the ring pull closure liner 100 into an outer ring 111 and an inner ring 112, and the inner side of the outer ring 111 is surroundingly connected with the outer side of the inner ring 112. Taking FIG. 3 as an example, the main cutting line 9a is equivalent to the line formed by the points i-j-k-l-m-i. In the process of lifting and tearing the ring pull closure liner 100 with the user's fingers, the outer ring 111 will not be broken and can be pressed and sealed on the container mouth again.

Also, as shown in FIG. 3, the inner ring 112 may include a hollow-out area 1121, a lifting part 1122 and a lifting neck 1123. Specifically, taking FIG. 3 as an example, the hollow-out area 1121 refers to an area surrounded by points a-b-c-d-e-f-g-a, the lifting part 1122 is equivalent to a quasi-circular area surrounded by points a-b-c-d-a, and the lifting neck 1123 is equivalent to an area surrounded by points g-h-e-d.

The lifting part 1122 has a first starting point 1122b1 and a second starting point 1122b2, taking FIG. 3 as an example, the first starting point 1122b1 may be a point b, and the second starting point 1122b2 may be a point a. The lifting neck 1123 is connected with the lifting part 1122, taking FIG. 3 as an example, the lifting neck 1123 is connected with a top of the lifting part 1122. The hollow-out area 1121 is formed by cutting a secondary cutting line 9b, taking FIG. 3 as an example, the secondary cutting line 9b is equivalent to a line connected by points a-b-c-d-e-f-g-a. The hollow-out area 1121 is located at a periphery of the lifting part 1122, and the hollow-out area 1121 is connected with two sides of the lifting neck 1123, taking FIG. 3 as an example, one end (i.e., point g) of the hollow-out area 1121 is connected with a left side of the lifting neck 1123, and the other end (i.e., point e) of the hollow-out area 1121 is connected with a right side of the lifting neck 1123. Also, the hollow-out area 1121 is the part where the functional layer is removed, so that the thickness of the hollow-out area 1121 is less than the thickness of the ring pull closure liner 100, whereby the nails and fingertips of the user's fingers can poke a lower part of the lifting part.

Next, the upper surface of the ring pull closure liner 100 is also provided with a tearing line 1122a0. One end (i.e., point b) of the tearing line 1122a0 is connected with the lifting part 1122, the other end (i.e., point i) of the tearing line 1122a0 is connected with the main cutting line 9a, and a part of the tearing line 1122a0 is completely overlapped with the main cutting line 9a. Taking FIG. 3 as an example, the tearing line 1122a0 is equivalent to a line connected by points b-a-g-h-i-j-k-l-m-i. The tearing line 1122a0 spans one side of the lifting neck 1123 (e.g., a left side of the lifting neck 1123, i.e., point g).

In one embodiment, the tearing line 1122a0 includes a first line segment 1122a1 and a second line segment 1122a2. One end of the first line segment 1122a1 is connected with the first starting point 1122b1, and the other end of the first line segment 1122a1 is connected with the main cutting line 9a. The first line segment 1122a1 spans one side of the lifting neck 1123 (e.g., the left side of the lifting neck 1123, i.e., point g). Taking FIG. 3 as an example, the first line segment 1122a1 is equivalent to a line connected by points b-a-g-h-i. One end of the second line segment 1122a2 is connected with the second starting point 1122b2, and the other end of the second line segment 1122a2 is connected with the main cutting line 9a. The second line segment 1122a2 spans one side of the lifting neck 1123 (e.g., the left side of the lifting neck 1123, i.e., point g), the second line segment 1122a2 partially overlaps the first line segment 1122a1, and a part of the second line segment 1122a2 completely overlaps the main cutting line 9a. Taking FIG. 3 as an example, the second line segment 1122a2 is equivalent to a line connected by points a-g-h-i-j-k-l-m-i.

In the embodiment, the lifting part 1122, the lifting neck 1123 and the hollow-out area 1121 are all located in the same half of the inner ring 112, so that the manufacturer can further use an area of the other half to carry out other design considerations, so as to further meet the design requirements of the manufacturer, thereby further enhancing the design flexibility of the manufacturer. Taking FIG. 3 as an example, the lifting part 1122, the lifting neck 1123 and the hollow-out area 1121 are all located in an area of the upper half of the inner ring 112. In other specific examples, the lifting part 1122, the lifting neck 1123 and the hollow-out area 1121 may also be located in an area of the lower half, the left half or the right half of the inner ring 112.

In this way, the user can directly hold the lifting part 1122 and pull up and peel off along the lifting part 1122, the lifting neck 1123 and the tearing line 1122a0, so that each layer in the inner ring 112 of the ring pull closure liner 100 is pulled upwards with the lifting part 1122, and then the effect of convenient opening is further realized.

Also, in the present embodiment, the first line segment 1122a1 is provided with at least one breakpoint, and the second line segment 1122a2 is provided with at least four breakpoints, so that even if the functional layer 1 is cut off or the hollow-out area of the functional layer 1 is cut off, the various blocks of the functional layer 1 can still be connected at the breakpoints and will not be scattered. In one embodiment, the part of the functional layer corresponding to the breakpoints is not completely cut off in the vertical direction. For example, in another embodiment, an end part of the upper surface of the functional layer corresponding to the breakpoints is not cut in the vertical direction from 0.02mm to 0.9mm along the horizontal direction of the tearing line 1122a0, and the part of the functional layer 1 corresponding to the tearing line 1122a0 except for the breakpoints is completely cut. In this way, when the user pinched and lifted the lifting part by hand and tore it to the breaking point along the tearing line, a short pause in the tearing action will be formed, so as to continue to accumulate the increased tearing force and be more conducive to subsequent tearing; in addition, during the processing, the existence of breakpoints also pulls the lifting part and the lifting neck from sagging down or floating up, so as to avoid poor quality during the processing.

In addition, in the present embodiment, the secondary cutting line 9b (equivalent to the line connected by the points a-b-c-d-e-f-g-a) fails to have a break point, so that after the functional layer 1 is cut out with a contour line of the hollow-out area, the residual material of the hollow-out area can easily be separated from the functional layer 1.

In one embodiment, if the release layer is coated on the lower surface of the functional layer, the coating area of the release layer is not less than the lifting part, taking FIG. 3 as an example, the coating area of the release layer is not less than the first coating range 21 (equivalent to the area surrounded by the dashed line in the figure), whereby, after a hollow-out area is cut off from the functional layer 1, after the functional layer 1 is laminated with the layer below, it can be ensured that the lifting part is not easily adhered to the electromagnetic induction heating layer 3 below, and the lifting part can be easily lifted. Also, in another embodiment, if the release layer is coated on the upper surface of the electromagnetic induction heating layer described later, the coating area of the release layer is not less than the hollow-out area and the lifting part described later, taking FIG. 3 as an example, the coating area of the release layer is not larger than the second coating range 22 (equivalent to the area surrounded by the dashed line in the figure), whereby, after the functional layer 1 is laminated with the layer below, the hollow-out area can be easily detached after the hollow-out area is cut down from a direction of the surface film of the functional layer 1, and it can be ensured the lifting part is not easily adhered to the electromagnetic induction heating layer 3 below, and the lifting part can be easily lifted.

In the embodiment, the main cutting line 9a, the secondary cutting line 9b and the tearing line 1122a0 can be regarded as a large cutting line, taking FIG. 3 as an example, the large cutting line is equivalent to a line connected by points g-f-e-d-c-b-a-g-h-i-j-k-l-m-i. In one embodiment, the large cutting line can be cut by a die cutter in a continuous arrangement, and then the large cutting line is formed in one go, so that the convenience of manufacturing can be improved in a one-stage manufacturing mode, and it is easy to tear apart and keep aesthetic.

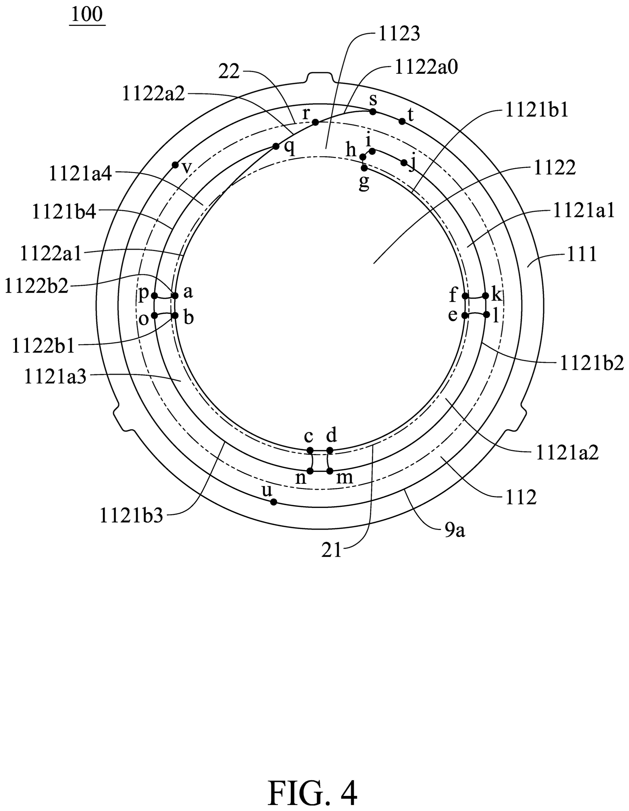

Finally, as shown in FIG. 4, the functional layer 1 of the ring pull closure liner 100 is provided with a main cutting line 9a, the main cutting line 9a divides the ring pull closure liner 100 into an outer ring 111 and an inner ring 112, and an inner side of the outer ring 111 is surroundingly connected with an outer side of the inner ring 112. Taking FIG. 4 as an example, the main cutting line 9a is equivalent to a line formed by points s-t-u-v-s. In the process of lifting and tearing the ring pull closure liner 100 with the user's fingers, the outer ring 111 will not be broken and can be pressed and sealed on the container mouth again.

Also, as shown in FIG. 4, the inner ring 112 may include a hollow-out area, a lifting part 1122 and a lifting neck 1123. Specifically, taking FIG. 4 as an example, the hollow-out area refers to an area surrounded by points g-h-i-j-k-f-g, e-l-m-d-e, c-n-o-b-c and a-p-q-a, the lifting part 1122 is equivalent to a quasi-circular area surrounded by points g-f-e-d-c-b-a-q, and the lifting neck 1123 is equivalent to an area surrounded by points q-h-i-r.

In the present embodiment, the hollow-out area may include a plurality of hollow-out sub-areas, and each hollow-out sub-area may be formed by cutting each secondary cutting sub-line, thereby further meeting the design requirements of the manufacturer, and then further enhancing the design flexibility of the manufacturer. Taking FIG. 4 as an example, the hollow-out area includes a first hollow-out sub-area 1121a1, a second hollow-out sub-area 1121a2, a third hollow-out sub-area 1121a3 and a fourth hollow-out sub-area 1121a4, wherein the first hollow-out sub-area 1121a1 is formed by cutting a first secondary cutting sub-line 1121b1 (equivalent to a line connected by points f-k-j-i-h-g-f), and the second hollow-out sub-area 1121a2 is formed by cutting a second secondary cutting sub-line 1121b2 (equivalent to a line connected by points e-l-m-d-e), the third hollow-out sub-area 1121a3 is formed by cutting a third secondary cutting sub-line 1121b3 (equivalent to a line connected by points c-n-o-b-c), and the fourth hollow-out sub-area 1121a4 is formed by cutting a fourth secondary cutting sub-line 1121b4 (equivalent to a line connected by points a-p-q-a).

The lifting part 1122 has a first starting point 1122b1 and a second starting point 1122b2, taking FIG. 4 as an example, the first starting point 1122b1 may be a point b, and the second starting point 1122b2 may be a point a. The lifting neck 1123 is connected with the lifting part 1122, taking FIG. 4 as an example, the lifting neck 1123 is connected with a top of the lifting part 1122. The hollow-out area is formed by cutting a secondary cutting line, taking FIG. 4 as an example, the secondary cutting line is equivalent to a line connected by points a-b-c-d-e-f-g-h-i-j-k-l-m-n-op-q-a. The hollow-out area is located at a periphery of the lifting part 1122, and the hollow-out area is connected with two sides of the lifting neck 1123, taking FIG. 4 as an example, one end (i.e., point q) of the hollow-out area is connected with a left side of the lifting neck 1123, and the other end (i.e., point h) of the hollow-out area is connected with a right side of the lifting neck 1123. Also, the hollow-out area is the part where the functional layer is removed, so that the thickness of the hollow-out area is less than the thickness of the ring pull closure liner 100, whereby the nails and fingertips of the user's fingers can poke a lower part of the lifting part.

Next, the upper surface of the ring pull closure liner 100 is also provided with a tearing line 1122a0. One end (i.e., point b) of the tearing line 1122a0 is connected with the lifting part 1122, the other end (i.e., point s) of the tearing line 1122a0 is connected with the main cutting line 9a, and a part of the tearing line 1122a0 is completely overlapped with the main cutting line 9a. Taking FIG. 4 as an example, the tearing line 1122a0 is equivalent to a line connected by points b-a-q-r-s-t-u-v-s. The tearing line 1122a0 spans one side of the lifting neck 1123 (e.g., a left side of the lifting neck 1123, i.e., point q).

In one embodiment, the tearing line 1122a0 includes a first line segment 1122a1 and a second line segment 1122a2. One end of the first line segment 1122a1 is connected with the first starting point 1122b1, and the other end of the first line segment 1122a1 is connected with the main cutting line 9a. The first line segment 1122a1 spans one side of the lifting neck 1123 (e.g., the left side of the lifting neck 1123, i.e., point q). Taking FIG. 4 as an example, the first line segment 1122a1 is equivalent to a line connected by points b-a-q-r-s. One end of the second line segment 1122a2 is connected with the second starting point 1122b2, and the other end of the second line segment 1122a2 is connected with the main cutting line 9a. The second line segment 1122a2 spans one side of the lifting neck 1123 (e.g., the left side of the lifting neck 1123, i.e., point q), the second line segment 1122a2 partially overlaps the first line segment 1122a1, and a part of the second line segment 1122a2 completely overlaps the main cutting line 9a. Taking FIG. 4 as an example, the second line segment 1122a2 is equivalent to a line connected by points a-q-r-s-t-u-v-s.

In this way, the user can directly hold the lifting part 1122 and pull up and peel off along the lifting part 1122, the lifting neck 1123 and the tearing line 1122a0, so that each layer in the inner ring 112 of the ring pull closure liner 100 is pulled upwards with the lifting part 1122, and then the effect of convenient opening is further realized.

Also, in the present embodiment, the first line segment 1122a1 is provided with at least two breakpoints, and the second line segment 1122a2 is provided with at least three breakpoints, so that even if the functional layer 1 is cut off or the hollow-out area of the functional layer 1 is cut off, the various blocks of the functional layer 1 can still be connected at the breakpoints and will not be scattered.

In addition, in the present embodiment, the secondary cutting line (equivalent to a line connected by points a-b-c-d-e-f-g-h-i-j-k-l-m-n-o-p-q-a) is provided with at least three breakpoints (e.g., at least one breakpoint between k-l, between m-n, and between o-p), so that even if the functional layer 1 is cut off or the hollow-out area of the functional layer 1 is cut off, the various blocks of the functional layer 1 can still be connected at the breakpoints and will not be scattered. In one embodiment, the part of the functional layer corresponding to the breakpoints is not completely cut off in the vertical direction. For example, in another embodiment, an end part of the upper surface of the functional layer corresponding to the breakpoints is not cut in the vertical direction from 0.02mm to 0.9mm along the horizontal direction of the tearing line 1122a0 and the secondary cutting line, and the part of the functional layer 1 corresponding to the tearing line 1122a0 except for the breakpoints and the part of the functional layer 1 corresponding to the secondary cutting line except for the breakpoints are completely cut.

In one embodiment, if the release layer is coated on the lower surface of the functional layer, the coating area of the release layer is not less than the lifting part, taking FIG. 4 as an example, the coating area of the release layer is not less than the first coating range 21 (equivalent to the area surrounded by the dashed line in the figure), whereby, after a hollow-out area is cut off from the functional layer 1, after the functional layer 1 is laminated with the layer below, it can be ensured that the lifting part is not easily adhered to the electromagnetic induction heating layer 3 below, and the lifting part can be easily lifted. Also, in another embodiment, if the release layer is coated on the upper surface of the electromagnetic induction heating layer described later, the coating area of the release layer is not less than the hollow-out area and the lifting part described later, taking FIG. 4 as an example, the coating area of the release layer is not larger than the second coating range 22 (equivalent to the area surrounded by the dashed line in the figure), whereby, after the functional layer 1 is laminated with the layer below, the hollow-out area can be easily detached after the hollow-out area is cut down from a direction of the surface film of the functional layer 1, and it can be ensured the lifting part is not easily adhered to the electromagnetic induction heating layer 3 below, and the lifting part can be easily lifted.

In the embodiment, the main cutting line 9a, a line connected by points f-k-j-i-h-g-f-e-d-c-b and the tearing line 1122a0 can be regarded as a large cutting line, taking FIG. 4 as an example, the large cutting line is equivalent to a line connected by points f-k-j-i-h-g-f-e-d-c-b-a-q-r-s-t-u-v-s. In one embodiment, the large cutting line can be cut by a die cutter in a continuous arrangement, and then the large cutting line is formed in one go, so that the convenience of manufacturing can be improved in a one-stage manufacturing mode, and it is easy to tear apart and keep aesthetic. In addition, the second secondary cutting sub-line 1121b2 (equivalent to a line connected by points e-l-m-d-e) can also be formed in one go, the third secondary cutting sub-line 1121b3 (equivalent to a line connected by points c-n-o-b-c) can also be formed in one go, and the fourth secondary cutting sub-line 1121b4 (equivalent to a line connected by points a-p-q-a) can also be formed in one go.

### [Second embodiment]

Next, the disclosure further describes a second embodiment of the ring pull closure liner 100', referring to FIG. 5A, FIG. 5A is a schematic sectional diagram of the ring pull closure liner 100' of another embodiment of the present disclosure. Also, as shown in FIG. 5A, in addition to including the surface film 11, the bonding film 12, the release layer 2 and the strong adhesion layer 6, the electromagnetic induction heating layer 3 and the sealing layer 4 (the sealing layer 4 may be a combination of the sealing film 41 and the adhesive 42) of the first embodiment, the ring pull closure liner 100' includes an adhesive 5. Also, in FIG. 5A, the release layer 2 and the strong adhesion layer 6 are coated above the electromagnetic induction heating layer 3.

Herein, the adhesive 5 is located between the surface film 11 and the bonding film 12, and it is a layer used to join the surface film 11 and the bonding film 12. As far as a specific aspect of the adhesive 5 is concerned, it can be the same as the adhesive 42, and will not be repeated here. Also, through the adhesive 5, the peeling strength between the surface film 11 and the bonding film 12, measured by a standard of ASTM D903, can be greater than 5N/15mm.

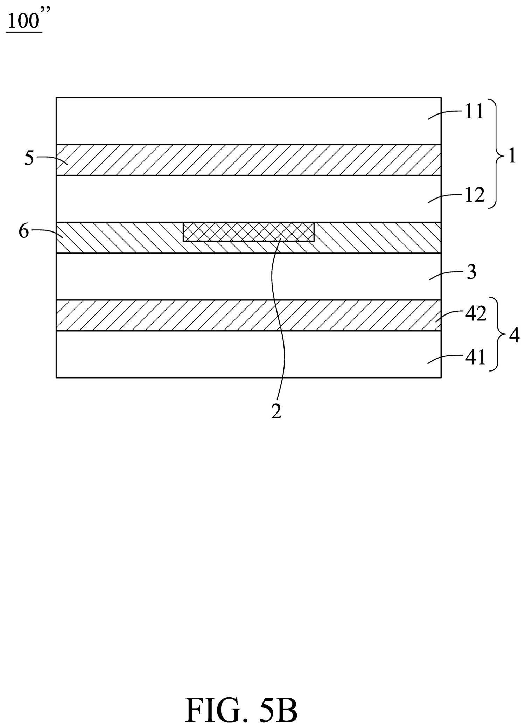

In addition, FIG. 5B is a schematic sectional diagram of the ring pull closure liner 100" of further embodiment of the present disclosure. Also, as shown in FIG. 5B, in addition to including the surface film 11, the bonding film 12, the release layer 2 and the strong adhesion layer 6, the electromagnetic induction heating layer 3 and the sealing layer 4 of the first embodiment, the ring pull closure liner 100" includes an adhesive 5. Also, in FIG. 5B, except for coating the release layer 2 and the strong adhesion layer 6 below the bonding film 12, the examples and action of the other layers are the same as those in FIG. 5A.

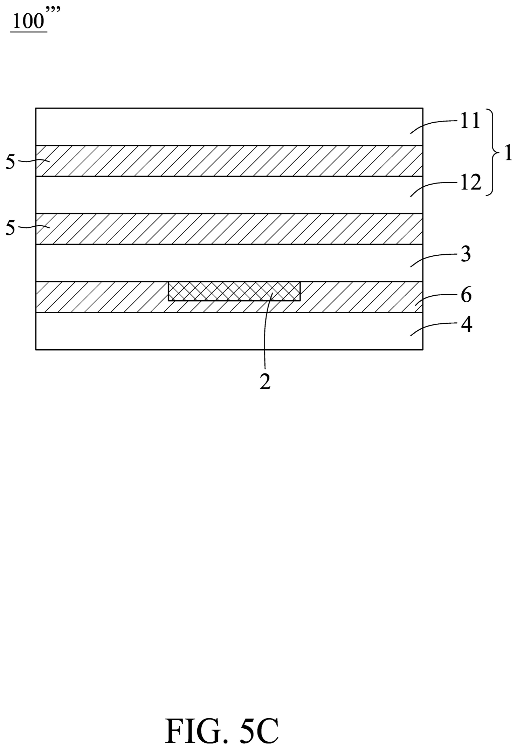

In addition, FIG. 5C is a schematic sectional diagram of the ring pull closure liner 100‴ of still further embodiment of the present disclosure. Also, as shown in FIG. 5C, in addition to including the surface film 11, the bonding film 12, the release layer 2 and the strong adhesion layer 6, the electromagnetic induction heating layer 3 and the sealing layer 4 of the first embodiment, the ring pull closure liner 100‴ includes an adhesive 5, wherein the adhesive 5 can be used to join the surface film 11 and the bonding film 12 as well as the bonding film 12 and the electromagnetic induction heating layer 3, the release layer 2 and the strong adhesion layer 6 are located between the electromagnetic induction heating layer 3 and the sealing layer 4, and the release layer 2 and the strong adhesion layer 6 are coated below the electromagnetic induction heating layer 3, the examples and action of the other layers are the same as those in FIG. 5A.

### [Modification example]

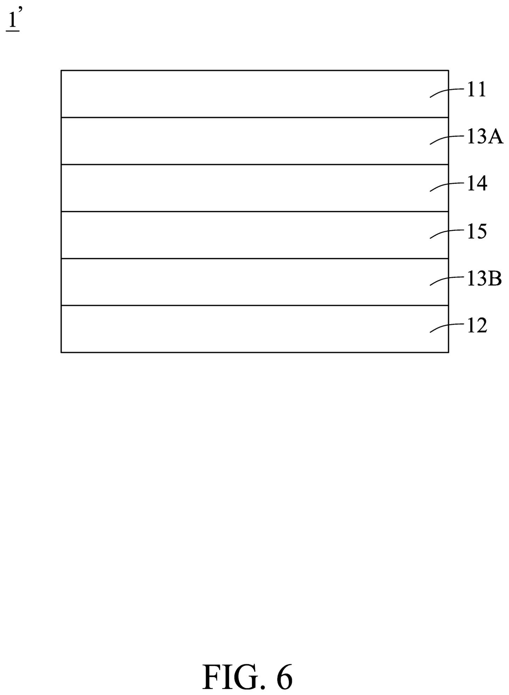

Then, the modification example of the present disclosure is illustrated, and the modification example is mainly for the improvement of the functional layer. Specifically, referring to FIG. 6, FIG. 6 is a schematic sectional diagram of the functional layer 1' of the modification example of the present disclosure.

First, as shown in FIG. 6, the functional layer 1' includes: a surface film 11, a foaming film 13A, a foaming board film 14, a lamination film 15, a lamination foaming film 13B and a bonding film 12, wherein the surface film 11 and the bonding film 12 are the same as the foregoing embodiment, and are not repeated herein.

Herein, although the foaming film 13A and the foaming board film 14 are shown in FIG. 6, the foaming film 13A and the foaming board film 14 are optional structures in the modification example, and both may exist at the same time or only one of them. Also, the order of the foaming film 13A and the foaming board film 14 shown in FIG. 6 is only an example, and it can also be the order of the foaming board film 14 above the foaming film 13A. Next, the foaming film 13A is EPE or EPP with a thickness of 40 to 3000µm, the foaming film 13A is thinner and can serve to fill the gap between the bottle and cap. In addition, the foaming board film 14 is EPE or EPP with a thickness of 0.3 to 5mm, the foaming board film 14 can produce a thickening effect to increase the resealable capacity of the ring pull closure liner and strengthen the sealing effect when the bottle mouth and the cap are not well matched.

In addition, although the lamination film 15 and the lamination foaming film 13B are shown in FIG. 6, the lamination film 15 and the lamination foaming film 13B are optional structures in the modification example, and both may exist at the same time or only one of them. Also, the order of the lamination film 15 and the lamination foaming film 13B shown in FIG. 6 is only an example, and it can also be the order of the lamination foaming film 13B above the lamination film 15. Herein, the lamination film 15 is at least one of the group consisting of PI, PEN, PET, PP, PA, and PE with a thickness of 12 to 150µm, which is used to increase the tensile strength of the ring pull closure liner. In addition, the lamination foaming film 13B is EPE or EPP with a thickness of 40 to 3000µm, and the lamination foaming film 13B is thinner and can serve to fill the gap between the bottle and cap.

In addition, although it is not shown in the figures, the layers of the functional layer of the modification example may be laminated by various ways (such as bonding, joining or laminating, etc.).

### [Wireless information integrated flake]

Next, the wireless information integrated flake that can be used as the electromagnetic induction heating layer of the present disclosure is described.

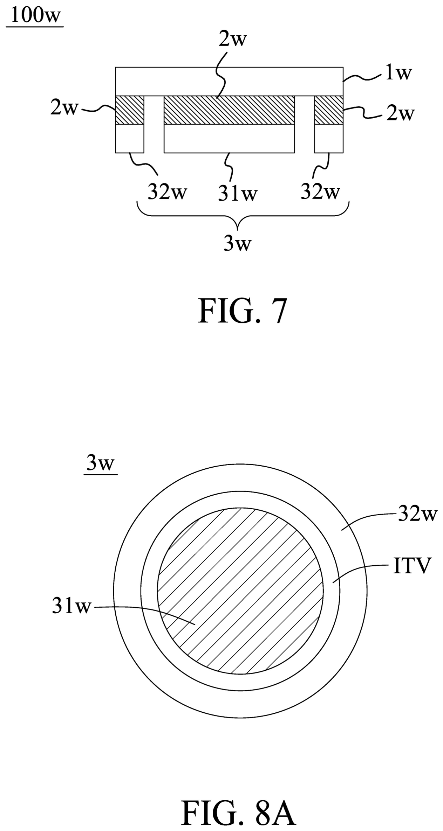

First, referring to FIG. 7, FIG. 7 is a schematic sectional diagram of the wireless information integrated flake 100w of an embodiment of the present disclosure. As shown in FIG. 7, the wireless information integrated flake 100w of an embodiment of the present disclosure includes: a base film 1w; a first adhesive layer 2w; an information and heating layer 3w. Among them, the first adhesive layer 2w is located between the base film 1w and the information and heating layer 3w, for joining the base film 1w and the information and heating layer 3w. Each layer is described in detailed below.

The base film 1w is used to make an initial layer of the wireless information integrated flake. In one embodiment, the material of the base film 1w may be selected from at least one of the group consisting of PI, PEN, PET, PC, PP and PE. Also, a thickness of the base film 1w is preferably 20 to 150µm, and in the range, the longitudinal and transverse tensile strength are large relatively. In addition, as shown in FIG. 7, a lower surface of the base film 1w is joined with the first adhesive layer 2w, and an upper surface of the base film 1w can be used as a printing surface to print different patterns.

The first adhesive layer is a layer used to join the base film and the information and heating layer. In one embodiment, the first adhesive layer 2w only needs to be able to join the base film 1w and the information and heating layer 3w, and the material thereof is composite adhesive. Also, a thickness of the first adhesive layer 2w may be 0.5 to 7µm, which can make the peeling strength between the two layers of material joined, measured by a standard of ASTM D903, to be greater than 4N/15mm.

The information and heating layer 3w includes an information area 31w and an electromagnetic induction heating ring 32w. The information area 31w has a function of wireless information reading and writing transmission, so as to facilitate the traceability and tracking of subsequent products. Among them, the information area 31w has an antenna 312w and a chip 311w to be mutually conducted. Also, the electromagnetic induction heating ring 32w can use electromagnetic induction to generate heat through the electromagnetic field generated by the electromagnetic induction sealing machine, so that the sealing layer of the closure liner is melted by heat and adheres to the container mouth of the container, and then can be used as an electromagnetic induction closure liner to seal the container mouth. By including the wireless information integrated flake of the present disclosure, most of the heat can be generated in the electromagnetic induction heating ring 32w, and there is only very little heat conducted in at least one physical connection bridge 33w between the antenna 312w and the electromagnetic induction heating ring 32w. Among them, a length of the physical connection bridge 33w may be 0.1mm-3mm, a width of the physical connection bridge 33w may be 0.01mm-5mm, and the material of the physical connection bridge 33w may be the same as that of the antenna 312w. **In** this way, a large amount of heat can be blocked from being transferred to the center area of the closure liner during electromagnetic induction sealing, and energy waste can be saved. Also, when applied to closure liners containing batteries, a thickness of the information and heating layer may be from 6µm to 2.5 mm; when applied to closure liners without batteries, the thickness of the information and heating layer may be from 6 to 300µm.

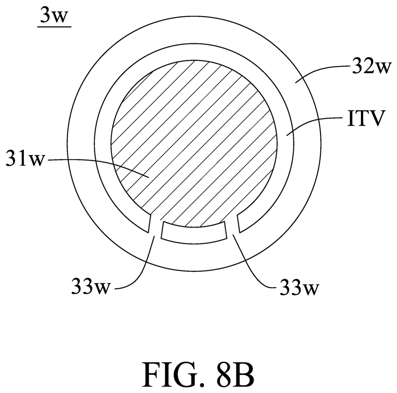

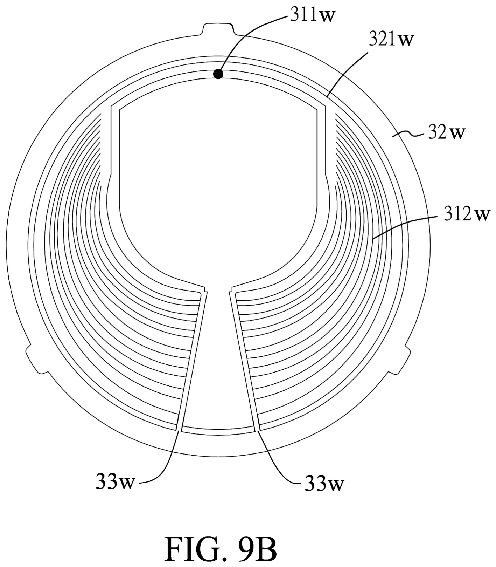

Next, FIG. 8A is a schematic plan diagram of the information and heating layer of an embodiment of the present disclosure, and FIG. 8B is a schematic plan diagram of the information and heating layer of another embodiment of the present disclosure, and as shown in FIG. 8A or 8B, the electromagnetic induction heating ring 32w is around the information area 31w in a plan viewing angle; also, as shown in FIG. 8A, a spacing ITV is filled between the electromagnetic induction heating ring 32w and the information area 31w, that is, there is no element for physical connection (such as the physical connection bridge described later) between the electromagnetic induction heating ring 32w and the information area 31w. Therefore, by filling the spacing ITV between the electromagnetic induction heating ring 32w and the information area 31w, the filled spacing ITV can block the heat conduction to the information area 31w when the electromagnetic induction heating occurs, so it is a preferable aspect. Also, the spacing ITV (the space between the outermost edge of the information area and the innermost edge of the electromagnetic induction heating ring) may be 0.1-3mm. Next, as shown in FIG. 8B, most of the positions between the electromagnetic induction heating ring 32w and the information area 31w have a spacing ITV, the spacing ITV can block most of the heat conduction to the information area 31w when the electromagnetic induction heating occurs, and the spacing ITV (the space between the outermost edge of the information area and the innermost edge of the electromagnetic induction heating ring) may be 0.1-3mm. In addition, there can be at least one physical connection bridge 33w (indicated as two physical connection bridges in FIG. 8B and FIG. 9B) between the antenna 312w and the electromagnetic induction heating ring 32w, a length of the physical connection bridges 33w may be 0.1mm-3mm, and a width of the physical connection bridge 33w may be 0.01mm-5mm. At this time, although the electromagnetic induction heating ring 32w of the closed-loop structure is electrically connected with the information area 31w, it will not reduce a distance of wireless communication too much. That is to say, the electromagnetic induction heating ring 32w and the information area 31w can be filled with a spacing ITV, and can have both the spacing ITV and the physical connection bridge 33w, or there can be no spacing (for example, the electromagnetic induction heating ring 32w and the information area 31w therebetween are filled with a physical connection bridge 33w).

In one embodiment, the material of the electromagnetic induction heating ring 32w may be metal, such as aluminum, copper, gold, silver, or tin. Also, from the point of view of the effect and cost of generating heat when subjected to a changing electromagnetic field, the electromagnetic induction heating ring 32w is preferably aluminum foil, and a thickness thereof is 6 to 40µm.

On the other hand, as for the chip 311w, it may have a unique identification code and can be selected according to the purpose. For example, it can be a radio frequency identification near field communication (RFID_NFC) chip, a radio frequency identification high frequency (RFID_HF) chip, a radio frequency identification ultra-high frequency (RFID _UHF) chip or a radio frequency identification microwave (RFID_MW) chip, and there is no special limitation. These chips can be matched with the antenna 312w described later to realize wireless information communication functions.

Next, as for the antenna 312w, it is mainly used to produce signals that can be transmitted wirelessly, and the material may be metal, such as copper, silver, gold, tin or aluminum, and there is no special limitation.

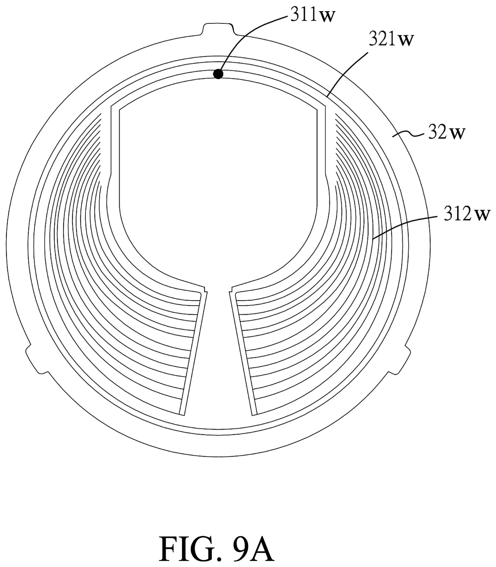

Then, FIG. 9A is a schematic plan diagram of the information area of an embodiment, and FIG. 9B is a schematic plan diagram of the information area of another embodiment. Among them, FIG. 9A corresponds to the embodiment in which the electromagnetic induction heating ring 32w and the information area 31w therebetween are filled with the spacing ITV in FIG. 8A above, and FIG. 9B corresponds to the embodiment in which most of the positions between the electromagnetic induction heating ring 32w and the information area 31w have the spacing ITV in FIG. 8B above. In addition, as shown in FIG. 9A or 9B, the information area 31w includes a chip 311w and an antenna 312w. Also, under the condition that the wireless information transmission function can be realized, the chip 311w and the antenna 312w can be arranged in FIG. 9A or 9B or other ways based on the RFID frequency band that the user wants to use, and there is no special limitation.

Furthermore, as shown in FIG. 9A or 9B, in another embodiment, an inner side of the inner edge of the electromagnetic induction heating ring 32w further includes an electromagnetic induction heating ring inner side cutting line 321w. Also, the electromagnetic induction heating ring inner side cutting line 321w preferably has a plurality of breakpoints, specifically, the electromagnetic induction heating ring inner side cutting line 321w may have four or more breakpoints; also, since the material of the wireless information integrated flake has a high breaking strength, the electromagnetic induction heating ring inner side cutting line 321w makes the wireless information integrated flake suitable for specific closure liners, such as the closure liner with the following characteristics: after the user pinches the lifting part with fingers to tear off the middle part of the closure liner, it will only the closure liner of the sealing ring remain at the container mouth. Also, as shown in FIG. 9A or 9B, the electromagnetic induction heating ring inner side cutting line 321w is located between the information area (including the chip 311w and the antenna 312w) and the electromagnetic induction heating ring 32w, and surrounds the information area. **In** one embodiment, the end part of the upper surface of the functional layer corresponding to the breakpoints is not cut in the vertical direction from 0.02mm to 0.9mm along the horizontal direction of the electromagnetic induction heating ring inner side cutting line 321w, the part of the wireless information integrated flake corresponding to the electromagnetic induction heating ring inner side cutting line 321w except for the breakpoints is completely cut off, and the plurality of breakpoints of the electromagnetic induction heating ring inner side cutting line 321w correspond to the plurality of breakpoints of the main cutting line 9a of the functional layer 1.

In addition, although FIG. 7 shows a situation where the base film 1w is on top and the information and heating layer 3w is at the bottom, the order of the base film 1w and the information and heating layer 3w can be reversed according to the requirements, that is, it is adjusted the base film 1w at the bottom and the information and heating layer 3w on top.

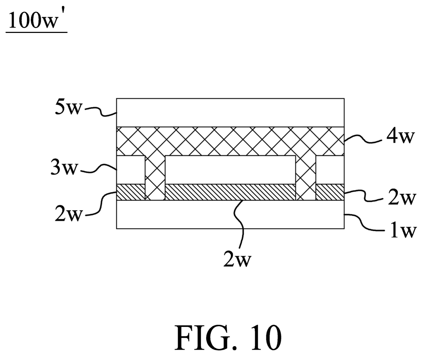

In addition, the wireless information integrated flake can further be a wireless information integrated flake 100w', which can be as shown in FIG. 10, in addition to the aforesaid base film 1w, the first adhesive layer 2w and the information and heating layer 3w, it further includes a protective layer 5w and a second adhesive layer 4w. Among them, the protective layer 5w is located on a side of the information and heating layer 3w away from the base film 1w. Also, the second adhesive layer 4w is located between the information and heating layer 3w and the protective layer 5w, and it is a layer used for joining the information and heating layer 3w and the protective layer 5w.

In one embodiment, as long as the second adhesive layer 4w can be joined with the information and heating layer 3w and the protective layer 5w, the material may be, for example, dry compound adhesive, and there is no special limitation. In addition, a thickness of the second adhesive layer 4w may be 0.5 to 7µm, which is preferably such that the peeling strength between the two layers of materials being joined, measured by a standard of ASTM D903, is greater than 4N/15mm. In addition, as shown in FIG. 10, the second adhesive layer 4w can be extended to fill the spacing between the electromagnetic induction heating ring 32w and the information area 31w, so as to improve the overall structural strength of the wireless information integrated flake 100w.

Next, the protective layer 5w is explained. The protective layer 5w is used to protect the information area 31w (i.e., the chip 311w, antenna 312w and the battery that can be added additionally) from external force damaging the chip 311w and battery and affecting the wireless information transmission ability, the material thereof may be selected from at least one of the group consisting of polyethylene terephthalate (PET), polypropylene (PP), polyethylene (PE), polyamide (PA), polyvinylidene chloride (PVDC), ethylene-vinyl alcohol copolymer (EVOH), polyethylene naphthalate (PEN) and polyimide (PI). In a preferable embodiment, a thickness of the protective layer 5w may be 12 to 100µm.

In addition, the upper surface or lower surface of the protective layer 5w may be used as a printing surface. Therefore, although FIG. 10 shows the situation where the base film 1w is on the bottom and the protective layer 5w is on top (the upper surface of the protective layer 5w is used as the printing surface), the order of the base film 1w and the protective layer 5w can be reversed according to the requirements, that is, it can be changed to a situation where the base film 1w is on top and the protective layer 5w is on the bottom (the lower surface of the protective layer 5w serves as the printing surface).

### [Fabrication of ring pull closure liner]

Based on the following steps, a ring pull closure liner of a preferable embodiment of the present disclosure is fabricated.

First, the surface film roll is printed to make the printed surface film roll, and next, the adhesive is coated on the lamination surface of the printed surface film roll, so that the surface film roll and the bonding film roll are dryly laminated, and the functional layer roll is put in a curing chamber for 24 hours or more.

Then, the adhesive is coated on the lower surface of the electromagnetic induction heating layer roll, so that the lamination surface of the electromagnetic induction heating layer roll and the sealing film roll is dryly laminated, and a composite part of the electromagnetic induction heating layer and the sealing layer is put in a curing chamber for 24 hours or more. Alternatively, as an alternative to the sealing layer, hot melt glue can be directly poured on the lower surface of the electromagnetic induction heating layer roll to make a composite part of the electromagnetic induction heating layer and the sealing layer.

Next, the release layer is coated on the lower surface of the bonding film of the functional layer roll, and then the upper surface of the surface film is cut with a printed pattern (such as the pattern in FIG. 2 to FIG. 4) using a die cutter to cut out the main cutting line, the secondary cutting line, the hollow-out area and the tearing line, etc. Among them, the coating area of the release layer is not less than the lifting part, and the hollow-out area is to hollow out the thickness of the functional layer and remove it, that is, the thickness of the hollow-out area is equal to the composite part of the electromagnetic induction heating layer and the sealing layer, and is less than the thickness of the ring pull closure liner.

The strong adhesion layer is coated on the upper surface of the electromagnetic induction heating layer, for example, the strong adhesion layer is coated on the upper surface of the electromagnetic induction heating layer in a full coating manner, so that the electromagnetic induction heating layer and the lower surface of the bonding film coated with the release layer are dryly laminated, and a ring pull closure liner roll is put in a curing chamber for 24 hours or more.

Finally, the upper surface of the surface film of the ring pull closure liner roll is cut downwards to cut out the ring pull closure liner of the size required by the customer.

Among them, the peeling strength between the two layers of materials laminated by the adhesive (such as dry compound adhesive), measured by a standard of ASTM D903, is greater than 4N/15mm, and the peeling strength between the two layers of materials laminated by the strong adhesion layer, measured by a standard of ASTM D903, is greater than 12N/15mm. The temperature of the heating tunnel above the printing machine is 60 to 80°C, and the temperature of the five sections of the heating tunnel above the dry compounding machine is 60 to 65°C, 65 to 70°C, 70 to 75°C, 75 to 80°C, and 80 to 85°C. The temperature of the press roller of the dry compounding machine is 50 to 60°C. The temperature of the curing chamber is 50 to 55°C.

On the other hand, it can fabricate a functional layer of a modification example based on the following steps.

First, the adhesive is coated on the surface film roll, so that it is dryly laminated with the foaming film roll, and a first lamination part roll is put in a curing chamber for 24 hours or more.

Secondly, the adhesive is coated on the lower surface of the foaming film of the first lamination part roll, so that the first lamination part roll and the upper surface of the foaming board film roll are dryly laminated, a second composite part roll is put in a curing chamber for 24 hours or more.

Furthermore, the adhesive is coated on the lower surface of the lamination film roll, so that it is dryly laminated with the bonding film roll, and a third composite part roll is put in a curing chamber for 24 hours or more.

Finally, the adhesive is coated on the upper surface of the lamination film of the third composite part roll, so that the third composite part roll and the lower surface of the foaming board film of the second composite part roll is dryly laminated, and the functional layer of the modification example is put in a curing chamber for 24 hours or more.

Among them, the peeling strength between the two layers of materials laminated by the adhesive, measured by a standard of ASTM D903, is greater than 5N/15mm. The temperature of the five sections of the heating tunnel above the dry compounding machine is 60 to 65°C, 65 to 70°C, 70 to 75°C, 75 to 80°C, and 80 to 85°C. The temperature of the press roller of the dry compounding machine is 50 to 60°C. The temperature of the curing chamber is 50 to 55°C.

In addition, as far as the compounding method is concerned, the aforesaid dry compounding method or the conventional method of pasting and pressing can be used, there is no special restriction.

In addition, based on the following steps, a ring pull closure liner of another preferable embodiment of the present disclosure is fabricated.

First, the adhesive is coated on the lower surface of the surface film roll, so that the surface film roll and the bonding film roll are dryly laminated, and the functional layer roll is put in a curing chamber for 24 hours or more.

Then, the adhesive is coated on the lower surface of the electromagnetic induction heating layer roll, so that the lamination surface of the electromagnetic induction heating layer roll and the sealing film roll is dryly laminated, and a first lamination part roll is put in a curing chamber for 24 hours or more. Alternatively, as an alternative to the sealing layer, hot melt glue can be directly poured on the lower surface of the electromagnetic induction heating layer roll to make a first lamination part roll.

Then, a release layer is coated on the upper surface of the electromagnetic induction heating layer of the first lamination part roll to make a second composite part roll; among them, the coating area of the release layer is not less than the lifting part and the hollow-out area.

Then, a strong adhesion layer is coated on the lower surface of the functional layer roll, so that the functional layer roll and the upper surface of the second composite part roll are dryly laminated, and a first roll of a ring pull closure liner blank in a curing chamber for 24 hours or more.

Next, the upper surface of the surface film of the first roll of the ring pull closure liner blank is printed, and a second roll of a printed ring pull closure liner blank is made.

Then, a die cutter is used to cut downwards on the upper surface of the surface film of the second roll of the ring pull closure liner blank, and the main cutting line, the secondary cutting line, the hollow-out area and the tearing line are cut out to make a ring pull closure liner roll.

Finally, the ring pull closure liner roll is cut to cut out the ring pull closure liner of the size required by the customer.

### [Fabrication of wireless information integrated flake roll]

Based on the following steps, a wireless information integrated flake roll of a preferable embodiment of the present disclosure is fabricated, and the wireless information integrated flake roll described herein may be applied to the process of making the aforesaid ring pull closure liner roll as an implementing aspect in the aforesaid electromagnetic induction heating layer roll.

First, the lamination surface of the base film roll is coated with composite adhesive (a first adhesive layer), and after compounding it with the lamination surface of the metal foil roll, the roll of the wireless information integrated flake blank is made. Secondly, the metal foil of the wireless information integrated flake blank roll is etched, the antenna and the chip are bonding into an electrical connection, and then the chip packaging protective glue is used by the dispensing machine to package the chip and the bonding wire connecting the chip and the antenna. At this time, the metal foil of the wireless information integrated flake blank roll forms the information and heating layer, and the wireless information integrated flake blank roll becomes the wireless information integrated flake roll.

Among them, the peeling strength between the two layers of materials laminated by composite adhesive, measured by a standard of ASTM D903, is greater than 4N/15mm.

In addition, if a battery is desired to be added to the information and heating layer, a fusion welding machine or conductive adhesive can be used to process the cell and the chip into an electrical connection.

On the other hand, on the basis of the aforesaid wireless information integrated flake roll, dry compound adhesive (a second adhesive layer) is coated on the lamination surface of the protective layer roll, and the lamination surface of the protective layer roll is dryly laminated with a surface (a surface away from the base film) of the information and heating layer of the wireless information integrated flake roll, and the wireless information integrated flake roll related to another embodiment can be put in the curing chamber for 24 hours or more.

It should be noted that the above description is only an embodiment, and the order in which the above layers are made is not specifically limited. Also, although the fabrication of a ring pull closure liner with a two-layer structure of the functional layer mainly containing a surface film and a bonding film is illustrated herein, the functional layer of the modification example can also be used as a substitute for the aforesaid two-layer structure of the functional layer, and other compounding methods (bonding, joining, coating, film laminating, laminating, etc.) can be used as an alternative to dry compounding.

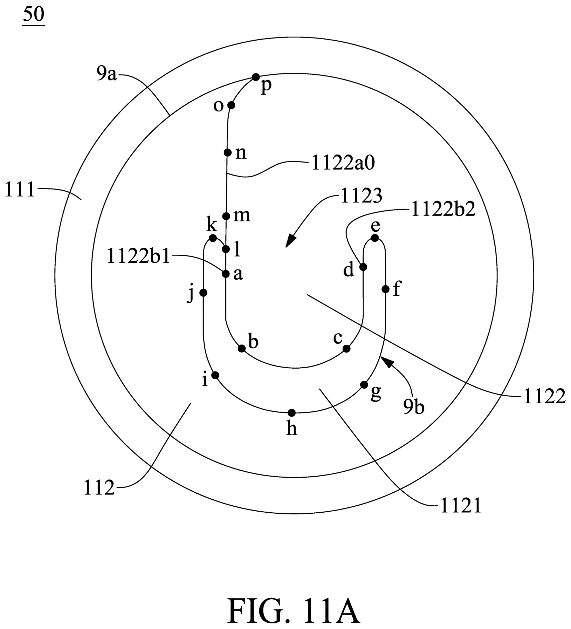

Furthermore, in order to clarify the embodiments covered by the ring pull closure liner of the present application, other particular examples would be presented to further describe other variational forms on the upper surface of the ring pull closure liner. With reference to FIG. 11A to FIG. 11C, FIG. 11A to FIG. 11C are schematic top views for illustrating the ring pull closure liner of other embodiment of the present disclosure. It is to be noted that the following is described for the variational parts for such as the lifting part, the lifting neck, the hollow-out area, the tearing line, and the tearing spacing; since the rest content may be substantially the same as those shown in FIG. 2 to FIG. 4, the descriptions thereof are omitted here.

As shown in FIG. 11A, the upper surface of the ring pull closure liner 50 is provided with a main cutting line 9a, the main cutting line 9a divides the ring pull closure liner 50 into an outer ring 111 and an inner ring 112, and an inner side of the outer ring 111 is surroundingly connected with an outer side of the inner ring 112. Also, as shown in FIG. 11A, the inner ring 112 may include a hollow-out area 1121, a lifting part 1122 and a lifting neck 1123. Specifically, taking FIG. 11A as an example, the hollow-out area 1121 refers to an area surrounded by points a-b-c-d-e-f-g-h-i-j-k-l-a, the lifting part 1122 is equivalent to an area surrounded by points a-b-c-d-a, and the lifting neck 1123 is equivalent to an area between points k-e. Also, the lifting part 1122 has a first starting point 1122b1 and a second starting point 1122b2, taking FIG. 11A as an example, the first starting point 1122b1 may be a point a, and the second starting point 1122b2 may be a point d. The lifting neck 1123 is connected with the lifting part 1122, taking FIG. 11A as an example, the lifting neck 1123 is connected with a top of the lifting part 1122. The hollow-out area 1121 is formed by cutting a secondary cutting line 9b, taking FIG. 11A as an example, the secondary cutting line 9b is equivalent to a line connected by points a-b-c-d-e-f-g-h-i-j-k-l-a. The hollow-out area 1121 is located at a periphery of the lifting part 1122, and the hollow-out area 1121 is connected with two sides of the lifting neck 1123, taking FIG. 11A as an example, one end (i.e., point k) of the hollow-out area 1121 is connected with a left side of the lifting neck 1123, and the other end (i.e., point e) of the hollow-out area 1121 is connected with a right side of the lifting neck 1123.

Next, the upper surface of the ring pull closure liner 50 is also provided with a tearing line 1122a0. One end (i.e., point a) of the tearing line 1122a0 is connected with the lifting part 1122, the other end (i.e., point p) of the tearing line 1122a0 is connected with the main cutting line 9a, and a part of the tearing line 1122a0 is completely overlapped with the main cutting line 9a. Taking FIG. 11A as an example, the tearing line 1122a0 is equivalent to a line connected by points a-l-m-n-o-p and the main cutting line 9a.

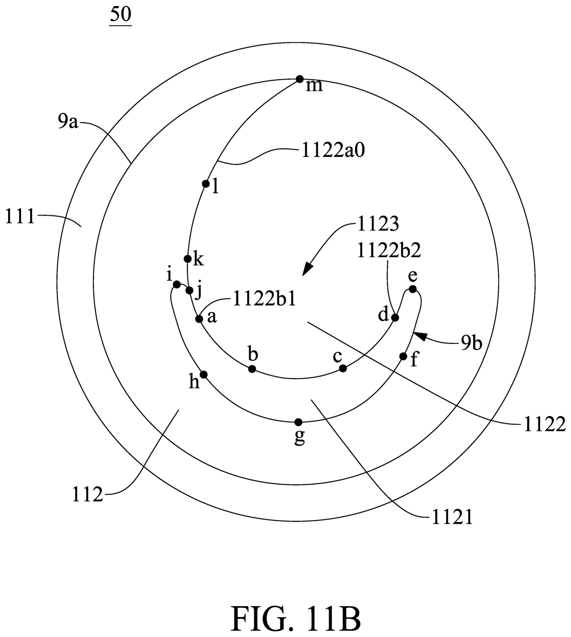

As shown in FIG. 11B, the upper surface of the ring pull closure liner 50 is provided with a main cutting line 9a, the main cutting line 9a divides the ring pull closure liner 50 into an outer ring 111 and an inner ring 112, and an inner side of the outer ring 111 is surroundingly connected with an outer side of the inner ring 112. Also, as shown in FIG. 11B, the inner ring 112 may include a hollow-out area 1121, a lifting part 1122 and a lifting neck 1123. Specifically, taking FIG. 11B as an example, the hollow-out area 1121 refers to an area surrounded by points a-b-c-d-e-f-g-h-i-j-a, the lifting part 1122 is equivalent to an area surrounded by points a-b-c-d-a, and the lifting neck 1123 is equivalent to an area between points i-e. Also, the lifting part 1122 has a first starting point 1122b1 and a second starting point 1122b2, taking FIG. 11B as an example, the first starting point 1122b1 may be a point a, and the second starting point 1122b2 may be a point d. The lifting neck 1123 is connected with the lifting part 1122, taking FIG. 11B as an example, the lifting neck 1123 is connected with a top of the lifting part 1122. The hollow-out area 1121 is formed by cutting a secondary cutting line 9b, taking FIG. 11B as an example, the secondary cutting line 9b is equivalent to a line connected by points a-b-c-d-e-f-g-h-i-j-a. The hollow-out area 1121 is located at a periphery of the lifting part 1122, and the hollow-out area 1121 is connected with two sides of the lifting neck 1123, taking FIG. 11B as an example, one end (i.e., point i) of the hollow-out area 1121 is connected with a left side of the lifting neck 1123, and the other end (i.e., point e) of the hollow-out area 1121 is connected with a right side of the lifting neck 1123.

Next, the upper surface of the ring pull closure liner 50 is also provided with a tearing line 1122a0. One end (i.e., point a) of the tearing line 1122a0 is connected with the lifting part 1122, the other end (i.e., point m) of the tearing line 1122a0 is connected with the main cutting line 9a, and a part of the tearing line 1122a0 is completely overlapped with the main cutting line 9a. Taking FIG. 11B as an example, the tearing line 1122a0 is equivalent to a line connected by points a-j-k-l-m and the main cutting line 9a.

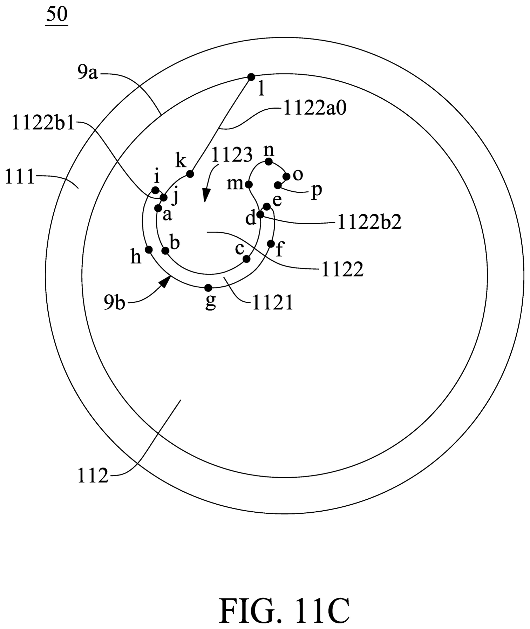

As shown in FIG. 11C, the upper surface of the ring pull closure liner 50 is provided with a main cutting line 9a, the main cutting line 9a divides the ring pull closure liner 50 into an outer ring 111 and an inner ring 112, and an inner side of the outer ring 111 is surroundingly connected with an outer side of the inner ring 112. Also, as shown in FIG. 11C, the inner ring 112 may include a hollow-out area 1121, a lifting part 1122 and a lifting neck 1123. Specifically, taking FIG. 11C as an example, the hollow-out area 1121 refers to an area surrounded by points a-b-c-d-e-f-g-h-i-j-a, the lifting part 1122 is equivalent to an area surrounded by points a-b-c-d-a, and the lifting neck 1123 is equivalent to an area between points i-e. Also, the lifting part 1122 has a first starting point 1122b1 and a second starting point 1122b2, taking FIG. 11C as an example, the first starting point 1122b1 may be a point a, and the second starting point 1122b2 may be a point d. The lifting neck 1123 is connected with the lifting part 1122, taking FIG. 11C as an example, the lifting neck 1123 is connected with a top of the lifting part 1122. The hollow-out area 1121 is formed by cutting a secondary cutting line 9b, taking FIG. 11C as an example, the secondary cutting line 9b is equivalent to a line connected by points a-b-c-d-e-f-g-h-i-j-a. The hollow-out area 1121 is located at a periphery of the lifting part 1122, and the hollow-out area 1121 is connected with two sides of the lifting neck 1123, taking FIG. 11C as an example, one end (i.e., point j) of the hollow-out area 1121 is connected with a left side of the lifting neck 1123, and the other end (i.e., point d) of the hollow-out area 1121 is connected with a right side of the lifting neck 1123.

Next, the upper surface of the ring pull closure liner 50 is also provided with a tearing line 1122a0. One end (i.e., point a) of the tearing line 1122a0 is connected with the lifting part 1122, the other end (i.e., point 1) of the tearing line 1122a0 is connected with the main cutting line 9a, and a part of the tearing line 1122a0 is completely overlapped with the main cutting line 9a. Taking FIG. 11C as an example, the tearing line 1122a0 is equivalent to a line connected by points a-j-k-l and the main cutting line 9a.

Further, in FIG. 11C, the upper surface of the ring pull closure liner 50 is also provided with the tearing and twisting cutting line 9c, taking FIG. 11C as an example, the tearing and twisting cutting line 9c is equivalent to a line connected by points d-m-n-o-p. Therefore, through the arrangement of the tearing and twisting cutting line 9c, after the user pinches the lifting part 1122 to lift and pinch the lifting part 1122 along the tearing line 1122a0 and tears along the tearing line 1122a0, the user can be guided to further peel the ring pull closure liner 50 along the tearing and twisting cutting line 9c, and further the user is reminded of properly changing the peeling force and the force application direction so as to improve the completeness of peeling of the closure liner.

In this way, according to the above-mentioned embodiments in FIG. 11A to FIG. 11C, the user can directly hold the lifting part 1122 and pull up and peel off it along the lifting part 1122, the lifting neck 1123 and the tearing line 1122a0, so that each layer in the inner ring 112 of the ring pull closure liner 50 is pulled upwards with the lifting part 1122, and then the effect of convenient opening is further realized.

## Claims

1. A ring pull closure liner (50; 100; 100'; 100"; 100‴), comprising:
a functional layer (1; 1'), comprising a surface film (11) and a bonding film (12) sequentially from top to bottom;
a sealing layer (4), located below the functional layer (1; 1');
a release layer (2) and a strong adhesion layer (6), the release layer (2) and the strong adhesion layer (6) are located between the surface film (11) and the sealing layer (4); and
an electromagnetic induction heating layer (3), located between the surface film (11) and the sealing layer (4);
wherein the functional layer (1; 1') of the ring pull closure liner (50; 100; 100'; 100"; 100‴) is provided with a main cutting line (9a), the main cutting line (9a) divides the ring pull closure liner (50; 100; 100'; 100"; 100‴) into an outer ring (111) and an inner ring (112), and an inner side of the outer ring (111) is surroundingly connected with an outer side of the inner ring (112),
wherein the inner ring (112) comprises:
a lifting part (1122);
a lifting neck (1123), connected with the bottom end of the lifting part (1122); and
a hollow-out area (1121), formed by cutting a secondary cutting line (9b), the hollow-out area (1121) is located at a periphery of the lifting part (1122), and the hollow-out area (1121) is connected with two sides of the lifting neck (1123);
wherein a thickness of the hollow-out area (1121) is less than a thickness of the ring pull closure liner (50; 100; 100'; 100"; 100‴),
wherein the functional layer (1; 1') of the ring pull closure liner (50; 100; 100'; 100"; 100‴) is further provided with a tearing line (1122a0), one end of the tearing line (1122a0) is connected with the lifting part (1122), the other end of the tearing line (1122a0) is connected with the main cutting line (9a), and a part of the tearing line (1122a0) is completely overlapped with the main cutting line (9a), and
the release layer (2) and the strong adhesion layer (6) are located on a lower surface of the bonding film (12) corresponding to the lifting part (1122), or are located on an upper surface or a lower surface of the electromagnetic induction heating layer (3).

2. The ring pull closure liner (50; 100; 100'; 100"; 100‴) according to claim 1, wherein the tearing line (1122a0) comprises a first line segment (1122a1) and a second line segment (1122a2), the first line segment (1122a1) is provided with at least one breakpoint, and the second line segment (1122a2) is provided with at least four breakpoints, the part of the functional layer (1; 1') corresponding to the breakpoints is not completely cut off in the vertical direction or an end part of the upper surface of the functional layer (1; 1') corresponding to the breakpoints is not cut in the vertical direction from 0.02mm to 0.9mm along the horizontal direction of the tearing line (1122a0), and the part of the functional layer (1; 1') corresponding to the tearing line (1122a0) except for the breakpoints is completely cut.

3. The ring pull closure liner (50; 100; 100'; 100"; 100‴) according to claim 1, wherein the material of the surface film (11) is selected from at least one of the group consisting of polyimide (PI), polyethylene naphthalate (PEN), polyamide (PA), polyethylene terephthalate (PET), polyethylene (PE) and polypropylene (PP).

4. The ring pull closure liner (50; 100; 100'; 100"; 100‴) according to claim 1, wherein the material of the bonding film (12) is selected from at least one of the group consisting of polyethylene terephthalate (PET), polypropylene (PP), expandable polyethylene (EPE), expandable polypropylene (EPP), polyamide (PA), and polyethylene (PE).

5. The ring pull closure liner (50; 100; 100'; 100"; 100‴) according to claim 1, wherein the strong adhesion layer (6) makes the peeling strength between the bonding film (12) and the electromagnetic induction heating layer (3) greater than 12N/15mm.

6. The ring pull closure liner (50; 100; 100'; 100"; 100‴) according to claim 1, wherein the release layer (2) is coated on a lower surface of the functional layer (1; 1'), and a coating area of the release layer (2) is not less than the lifting part (1122).

7. The ring pull closure liner (50; 100; 100'; 100"; 100‴) according to claim 1, wherein the release layer (2) is coated on an upper surface of the electromagnetic induction heating layer (3), and a coating area of the release layer (2) is not less than the hollow-out area (1121) and the lifting part (1122).

8. The ring pull closure liner (50; 100; 100'; 100"; 100‴) according to claim 7, wherein the surface film (11) and the bonding film (12) therebetween further comprise a lamination film (15) and/or a lamination foaming film (13B), and the lamination film (15) is at least one of the group consisting of PI, PEN, PET, PP, PA, and PE, the lamination foaming film (13B) is EPE or EPP.

9. The ring pull closure liner (50; 100; 100'; 100"; 100‴) according to claim 1, wherein the electromagnetic induction heating layer (3) is aluminum foil or a wireless information integrated flake (100w; 100w').

10. The ring pull closure liner (50; 100; 100'; 100"; 100‴) according to claim 7, wherein the wireless information integrated flake (100w; 100w') comprises: a base film (1w); an information and heating layer (3w), comprising an information area (31w) and an electromagnetic induction heating ring (32w); a first adhesive layer (2w), located between the base film (1w) and the information and heating layer (3w); wherein the information area (31w) has an antenna (312w) and a chip (311w) to be mutually conducted, and the electromagnetic induction heating ring (32w) is around the information area (31w) in a plan viewing angle.

11. The ring pull closure liner (50; 100; 100'; 100"; 100‴) according to claim 10, wherein the wireless information integrated flake (100w; 100w') further has a protective layer (5w) and a second adhesive layer (4w), the protective layer (5w) is located on a side of the information and heating layer (3w) away from the base film (1w), and the second adhesive layer (4w) is located between the information and heating layer (3w) and the protective layer (5w).

12. The ring pull closure liner (50; 100; 100'; 100"; 100‴) according to claim 9, wherein there is a spacing between the electromagnetic induction heating ring (32w) and the information area (31w).

13. The ring pull closure liner (50; 100; 100'; 100"; 100‴) according to claim 9, wherein there is full of a spacing between the electromagnetic induction heating ring (32w) and the information area (31w).

14. The ring pull closure liner (50; 100; 100'; 100"; 100‴) according to claim 12, wherein the spacing is a space between the outermost edge of the information area (31w) and the innermost edge of the electromagnetic induction heating ring (32w), the space is 0.1mm-3mm.

15. The ring pull closure liner (50; 100; 100'; 100"; 100‴) according to claim 9, wherein the information and heating layer (3w) further comprises at least one physical connection bridge, used to connect the information area (31w) and the electromagnetic induction heating ring (32w).
